# EUROPÄISCHE PATENTANMELDUNG

(11) **EP 1 457 891 A2**
(43) Veröffentlichungstag der Anmeldung: **15.09.2004**
(21) Anmeldenummer: 04005624.4
(22) Anmeldetag: 10.03.2004
(51) Int. Cl.: G06F 17/30

(54) **Verfahren und System zum gemeinsamen Betrachten von Bildschirm Anzeigen**

(30) Priorität: 11.03.2003 DE 10310886
(71) Anmelder: Tenovis GmbH & Co. KG, 60326 Frankfurt am Main (DE)
(72) Erfinder: Hars, Rüdiger, 24568 Kaltenkirchen (DE)
(74) Vertreter: Pfeifer, Lothar

(57) **Zusammenfassung**

Ein Verfahren zum gleichzeitigen Anzeigen desselben Inhalts auf zu verschiedenen Computern (34, 38) gehörenden Bildschirmen hat die Verfahrensschritte
- Starten eines Steuerprogramms (12);
- Starten eines ersten Browsers (14);
- Auswählen eines Links zu dem Steuerprogramm auf dem ersten Browser und übermitteln einer Adresse einer Web-Seite zu dem Steuerprogramm (16);
- Starten eines zweiten Browsers mit der Web-Seite durch das Steuerprogramm (18);
- Starten eines ersten Viewers auf einem ersten Computer des ersten Browsers (20);
- Starten eines zweiten Viewers auf einem zweiten Computer (22);
- Anzeigen des Inhalts der Web-Seite des zweiten Browsers auf dem ersten Viewer (24);
- Anzeigen des Inhalts der Web-Seite des zweiten Browsers auf dem zweiten Viewer (26). Mit dem Verfahren ist ein gemeinsames Browsen im Internet für mehrere räumlich entfernte Benutzer möglich.

## Beschreibung

Die Erfindung betrifft ein Verfahren und ein System zum gleichzeitigen Anzeigen desselben Inhalts auf mehreren Bildschirmen, wobei insbesondere der Inhalt von Internet-Seiten mehreren Nutzern gleichzeitig angezeigt wird.

Das Internet wird heute immer öfter von Unternehmen als weitere Möglichkeit zur Pflege von Kundenkontakten und als Marketinginstrument genutzt. Dabei hat man festgestellt, dass die reine Präsenz im Internet sehr oft - gerade bei beratungsintensiven Produkten - nicht ausreicht. Dies um so mehr, als schon eine geringe offen gebliebene Frage im Rahmen der Web-Präsenz das einmal erweckte Kundeninteresse durch einen Mausklick zu einem Wettbewerber führen kann.

Daher will man dem Kunden die Möglichkeit bieten, bei Fragen eine geführte Beratung im Internet zu erhalten. Dabei schauen sich der Kunde und ein Berater des Unternehmen trotz der örtlichen Trennung gleichzeitig Internetpräsentationen an und können daneben z.B. noch über das Telefon direkt miteinander kommunizieren. Hat der Kunde Fragen so können diese sofort durch den Berater beantwortet werden. Der Berater hat jetzt auch die Möglichkeit, den Kunden in Bereiche der Web-Präsenz zu führen, die er zuvor vielleicht übersehen hat.

Gemäß dem Stand der Technik wird dazu der Ansatz gewählt, zwei oder mehr Web-Browser dazu zu bringen, möglichst synchron die gleichen Web-Inhalte darzustellen. Die Darstellung soll eine Interaktion mit einer Web-Seite ermöglichen unabhängig davon, welcher Teilnehmer die Interaktion ausgelöst hat. Derartige Produkte sind der X-Agent von der Firma Brokat und eConsultant von der Firma USU-Openshop. Diese Produkte versuchen die beteiligten Web-Browser so zu steuern, dass eine ausgewählte Seite möglichst zeitgleich von allen beteiligten Browsern dargestellt wird. Dieser Ansatz erfordert eine Server-Komponente des Systems, die alle darzustellenden Seiten parsen muss. Die Server-Komponente muss die Inhalte der Web-Seiten so aufbereiten, dass keiner der beteiligten Browser die Möglichkeit hat, Seiten anzufordern, die nicht vorher von einem Shared-Browsing-Server bearbeitet wurden.

Dieser Ansatz führt zu Problemen bei einem komplexen Seitenaufbau. So können z.B. die bekannten Produkte gar nicht oder nur begrenzt mit Frames umgehen und in Seiten eingebettete Java-Applets können überhaupt nicht synchron gehalten werden. Dies führt bei einer Abstimmung der simultanen Darstellung mit der Web-Präsenz zu signifikanten Einschränkungen bei dem Aufbau der Web-Präsenz.

Ein weiterer Nachteil dieses Ansatzes ist es, dass der Server alle heute bekannten Web-Standards beherrschen muss und zukünftige Web-Standards beherrschen müsste. Eine solche Serverkomponente muss etwa den gleichen Funktionsumfang beherrschen wie die Rendering-Engines der z.Z. üblichen Browser wie z.B. der Internet-Explorer von der Firma Microsoft. Da man - wenn überhaupt - nur einen geringen Einfluss auf neue Standards im Internet hat, ist man gezwungen, die Server-Komponente ständig weiter zu entwickeln und an Browser-Updates bzw. neue Web-Standards anzupassen, wenn man vermeiden will, dass ein einmal aufgesetztes System schon bald unbrauchbar wird.

Daneben gibt es Produkte nach dem Stand der Technik, die nicht einzelne Applikationen teilen, sondern den gesamten Desktop. Diese sind aber gerade im Bereich des Internets ungeeignet, da dann einer der Beteiligten immer den gesamten Desktop seines Systems freigeben müsste, was zu einem erheblichen Sicherheitsrisiko führt.

Der Erfindung liegt daher die Aufgabe zugrunde, ein Verfahren und ein System zum gleichzeitigen Anzeigen desselben Inhalts auf mehreren Bildschirmen zu schaffen, dass die oben beschriebenen Einschränkungen von Systemen nach dem Stand der Technik vermeidet.

Diese Aufgabe wird durch die Verfahren und eine Vorrichtung mit den Merkmalen der unabhängigen Patentansprüche gelöst. Bevorzugte Ausgestaltungen der Erfindung ergeben sich aus den abhängigen Ansprüchen.

Das erfindungsgemäße Verfahren zum gleichzeitigen Anzeigen desselben Inhalts auf zu verschiedenen Computern gehörenden Bildschirmen weist die folgenden Verfahrensschritte auf:
- Starten eines Steuerprogramms;
- Starten eines ersten Browsers;
- Auswählen eines Links zu dem Steuerprogramm auf dem ersten Browser und übermitteln einer Adresse einer Web-Seite zu dem Steuerprogramm;
- Starten eines zweiten Browsers mit der Web-Seite;
- Starten eines ersten Viewers auf einem ersten Computer des ersten Browsers;
- Starten eines zweiten Viewers auf einem zweiten Computer;
- Anzeigen des Inhalts der Web-Seite des zweiten Browsers auf dem ersten Viewer;
- Anzeigen des Inhalts der Web-Seite des zweiten Browsers auf dem zweiten Viewer. Dabei sind parallel auf verschiedenen Computern bzw. Bildschirmen ablaufende Schritte separat aufgeführt. Diese Verfahrensschritte laufen nicht notwendig in dieser Reihenfolge ab.

Die Verfahrensschritte Starten eines Steuerprogramms und Starten eines ersten Browsers haben vorbereitenden Charakter und können in beliebiger Reihenfolge ausgeführt werden. Ebenso können der zweite Browser, der erste Viewer und der zweite Viewer in beliebiger Reihenfolge starten, sie müssen jedoch für die späteren Verfahrensschritte gleichzeitig laufen. Entsprechend kann das Anzeigen im ersten Viewer und im zweiten Viewer in beliebiger Reihenfolge nacheinander erfolgen, jedoch werden die Bildschirme nach Vervollständigung der Anzeigen gleichzeitig denselben Inhalt anzeigen.

Das Steuerprogramm kann wahlweise auf dem ersten Computer, dem zweiten Computer oder einem weiteren als Server-Computer ablaufen. Erfindungsgemäß wurde erkannt, dass gerade die Trennung von Browser und Anzeige Vorteile in Bezug auf die Verteilung der Datenverarbeitung und in Bezug auf die Einbeziehung weiterer Benutzer bringt.

Im Zustand nach dem Anzeigen des Inhalts der Web-Seite wird beiden Benutzern derselbe Inhalt einer Web-Seite, nämlich derjenigen deren Adresse an das Steuerprogramm übermittelt wurde, auf zu verschiedenen Computern gehörenden Bildschirmen gleichzeitig angezeigt.

Nach einer vorteilhaften Ausgestaltung des erfindungsgemäßen Verfahrens ist ein Browsen auf der gemeinsam angezeigten Web-Seite des zweiten Browsers möglich mit den weiteren Verfahrensschritten, nicht notwendig in dieser Reihenfolge
- Durchführen einer Eingabe zu der angezeigten Web-Seite des zweiten Browsers auf einem der Viewer und übermitteln von Daten des ausgewählten Links zu dem zweiten Browser;
- Durchführen der Eingabe mit den übermittelten Daten durch den zweiten Browser;
- Anzeigen des Inhalts der Web-Seite des zweiten Browsers auf dem ersten Viewer;
- Anzeigen des Inhalts der Web-Seite des zweiten Browsers auf dem zweiten Viewer. Dazu können beiden Viewern oder nur einem Viewer Browse-Aktionen auf der im Viewer angezeigten Web-Seite erlaubt sein. Im ersten Fall wird von einem gemeinsamen Browsen gesprochen, während im zweiten Fall derjenige Benutzer mit der Browse-Berechtigung browst und der weitere Benutzer denselben Web-Seiten-Inhalt an einem räumlich entfernten Ort anschauen kann.

Ein wesentlicher Punkt der Erfindung liegt darin, von dem Ansatz nach dem Stand der Technik fortzukommen, mehrere beteiligte Browser synchron zu halten. Stattdessen wird erfindungsgemäß ein Steuer-Browser bzw. eine Steuer-Browser-Instanz gestartet. Der Steuer-Browser kann alle Web-Seiten ohne Vorverarbeitung wie jeder übliche Browser anfordern und verarbeiten. Der Steuer-Browser ist selbst aber nicht in der Lage irgend etwas zu visualisieren. Dazu werden Viewer benötigt. Der Steuer-Browser kommuniziert mit den Viewern vorzugsweise über ein Protokoll, dass unabhängig ist von in Web-Seiten verwendeten Techniken Standards wie HTML, Stylesheets, Applets oder sonstiges.

Die an einer Session beteiligten PCs müssen jetzt nur noch die Viewer ggf. laden und starten. Die Viewer werden vorteilhaft als Applets implementiert. Dabei sendet das Steuerprogramm dem ersten Browser, auf dem der Links zu dem Steuerprogramm ausgewählt wurde, gegebenenfalls auch dem weiteren Computer, ein Applet, worauf hin ein Viewer auf dem jeweiligen PC geladen und gestartet wird. So entsteht auch kein Sicherheitsproblem für den Anwender, da keiner der beteiligten Benutzer seinen Desktop freigeben muss. Innerhalb des Viewers kann jeder autorisierte Benutzer alles machen, was man sonst direkt mit dem eigentlichen Browser machen würde - Links verfolgen, Eingabefelder ausfüllen usw.

Eine wesentliche bevorzugte Anwendung der Erfindung liegt im Dienstleistungsbereich, wobei als Dienst das Steuerprogramm und der zweite Browser vorzugsweise als Serverprogramm auf einem Server-Computer bereitgestellt werden und vorzugsweise auch ablaufen. In diesem Falle sind die Benutzer mit PCs ausgestattet, auf denen jeweils ein Viewer zum Darstellen der Information des zweiten Browsers läuft, der die Information auf einem jeweils vorhandenen Bildschirm anzeigt.

Nach einer vorteilhaften Ausgestaltung der Erfindung kommt als Server eine UNIX-Maschine zum Einsatz. Damit ist es in einem sogenannten X-Window-System möglich, eine Anwendung, die Browser-Instanz, so zu konfigurieren, dass die Visualisierung nicht auf der Maschine selbst, sondern auf einem beliebigen anderen Rechner stattfindet. Als Browser auf dem Server kann ein Open-Source-Browser genutzt werden.

Als Kern des Steuer-Browsers sind für die HTML-Umsetzung die gleichen Rendering-Engines verwendbar, wie sie in gebräuchlichen Browsern eingesetzt werden. Dies ermöglicht, auch in der Zukunft standardkonform zu bleiben.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
FIG. 1 ein Ablaufdiagramm eines Verfahrens zum gleichzeitigen Anzeigen desselben Inhalts gemäß der Erfindung;
FIG. 2 ein Ablaufdiagramm eines Verfahrens zum gleichzeitigen Anzeigen gemäß einer bevorzugten Ausgestaltung der Erfindung;
FIG. 3 eine schematische Darstellung einer für die Durchführung des Verfahrens gemäß der Erfindung eingesetzten Hardware; und
FIG. 4 eine schematische Darstellung einer bei der Durchführung des Verfahrens gemäß einer bevorzugten Ausgestaltung der Erfindung eingesetzten Software.

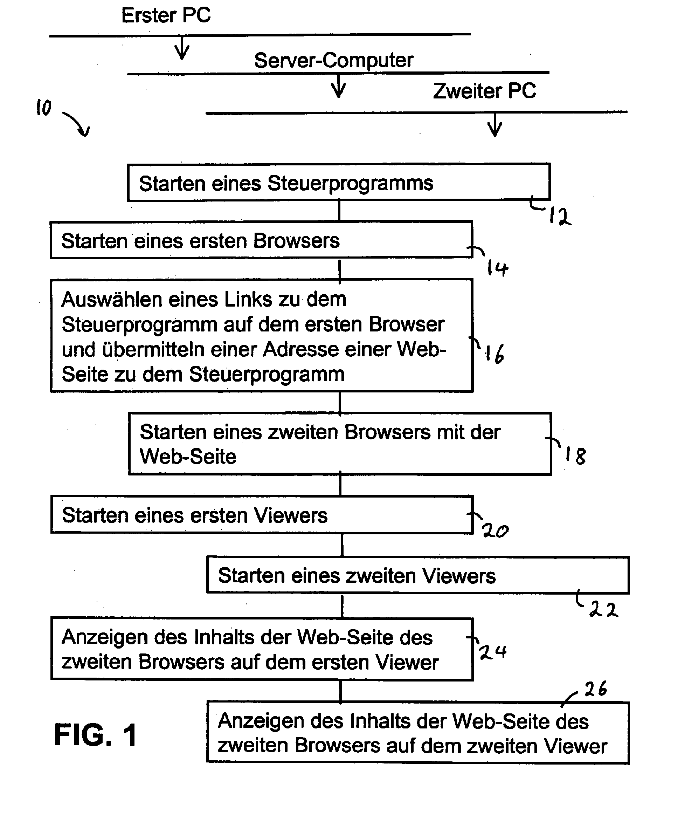

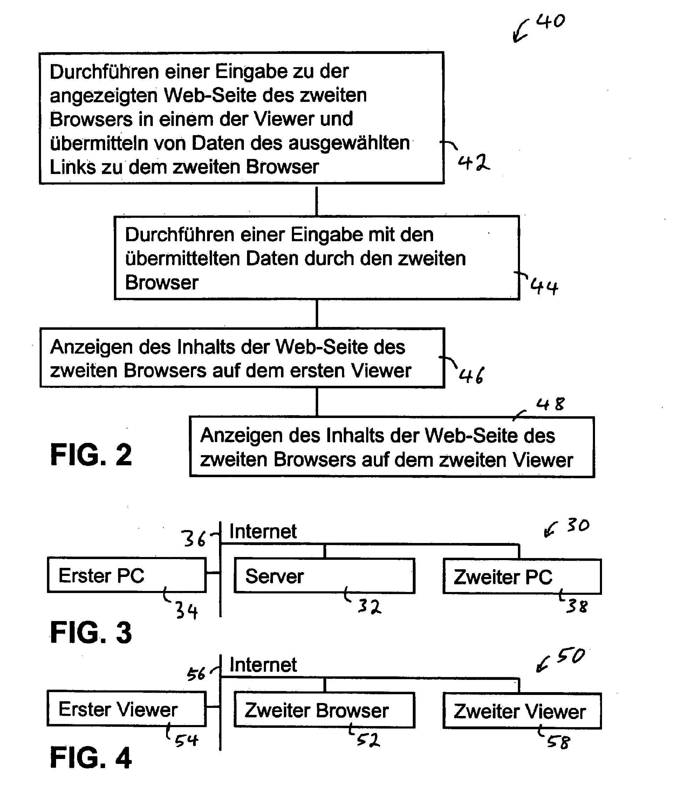

FIG. 1 zeigt ein Ablaufdiagramm 10 eines Verfahrens zum gleichzeitigen Anzeigen desselben Inhalts auf zu verschiedenen Computern gehörenden Bildschirmen gemäß der Erfindung. An dem Verfahrensablauf sind mehrere Computer beteiligt, auf die mit Bezug zu FIG. 3 hingewiesen wird, welche schematisch ein System 30 für die Durchführung des Verfahrens gemäß der Erfindung zeigt. Dieses Beispiel ist auf die Anwendung eines Dienstes abgestellt, der als Server-Programm auf einem Server-Computer bereitgestellt und nachgefragt wird. In diesem Beispiel wird einem Kunden und einem Berater derselbe Inhalt auf zu verschiedenen Computern gehörenden Bildschirmen gleichzeitig angezeigt.

Das Verfahren beginnt mit dem Starten eines Steuerprogramms, Schritt 12, auf einem Server-Computer 32 und dem Starten eines ersten Browsers, Schritt 14, auf einem PC 34 des Kunden. Der Kunde surft mit dem ersten Browser im Internet und trifft auf eine Web-Seite mit einem Link zu einem Dienst, der bei Aktivierung das erfindungsgemäße Verfahren durchführt bzw. fortsetzt.

Mit der Aktivierung durch Anklicken eines entsprechenden Buttons durch den Kunden erfolgt ein Auswählen eines Links zu dem Steuerprogramm auf dem ersten Browser und Übermitteln einer Adresse der aktiven Web-Seite zu dem Steuerprogramm, Schritt 16. Diese Übermittlung geschieht vom ersten Browser auf dem PC 34 über das Internet 36 zu dem Server-Computer 32. Damit wird das Steuerprogramm aktiv und eröffnet eine Session für den Kunden. Das Steuerprogramm startet in Schritt 18 auf dem Server einen zweiten Browser mit der Web-Seite, deren Adresse übermittelt wurde.

Weiterhin initiiert das Steuerprogramm das Starten eines ersten Viewers auf dem PC 34 des ersten Browsers, Schritt 20, und das Starten eines zweiten Viewers auf einem zweiten PC 38, Schritt 22. Der zweite PC 38 ist hier der PC eines Beraters, der vorteilhaft als verfügbarer Berater vom Steuerprogramm ermittelt und ausgewählt worden ist oder auch fest vorgegeben sein kann. Auch dieser PC 38 ist mit dem Server-Computer 32 über das Internet 36 oder über ein LAN (Local Area Network) mit IP (Internet Protokoll) verbunden. Dabei hat das Steuerprogramm in Schritt 20 dem auf dem PC 34 laufenden ersten Browser ein Applet gesendet, worauf hin über den ersten Browser auf dem PC 34 ein Viewer geladen und gestartet worden ist. In Schritt 22 dagegen hat das Steuerprogramm eine Instanz eines auf dem zweiten PC 38 bereits laufenden Viewers gestartet.

Nun erfolgt mit Schritt 24 auf dem PC 34 das Anzeigen des Inhalts der Web-Seite des zweiten Browsers auf dem ersten Viewer und mit dem parallelen Schritt 26 auf dem zweiten PC 38 das Anzeigen des Inhalts der Web-Seite des zweiten Browsers auf dem zweiten Viewer.

In diesem Zustand nach Verfahrensschritt 28 wird beiden Benutzern derselbe Inhalt derjenigen Web-Seite, deren Adresse an das Steuerprogramm übermittelt wurde, auf zu verschiedenen Computern gehörenden Bildschirmen gleichzeitig angezeigt.

FIG. 2 zeigt nun ein Ablaufdiagramm 40 zu einem Beispiel für eine besonders vorteilhafte Ausgestaltung des erfindungsgemäßen Verfahrens, nach der auch ein Browsen mit dem zweiten Browser auf dem Server-Computer 32 möglich ist. Ausgehend vom Zustand des Systems nach Schritt 26 aus FIG. 1 erfolgt nun durch den Kunden mit PC 34 oder durch den Berater mit PC 38 das Durchführen einer Eingabe zu der angezeigten Web-Seite des zweiten Browsers auf einem der Viewer und das Übermitteln von Daten der Eingabe zu dem zweiten Browser, Schritt 42. Der zweite Browser führt nun die Eingabe mit den übermittelten Daten durch in Schritt 44. Dabei führt er je nach Eingabe zum Beispiel einen Link zu einer neuen Web-Seite, einen Eintrag in ein Textfeld oder einen Aufruf eines neuen Fensters etwa zum Download aus. Schließlich erfolgt das Anzeigen des Inhalts der aktuellen Web-Seite bzw. des aktuellen Browser-Inhalts des zweiten Browsers auf dem ersten Viewer; Schritt 46, und auf dem zweiten Viewer; Schritt 48.

In diesem Beispiel sind sowohl der Kunde als auch der Berater bzw. deren PCs autorisiert, mittels ihres jeweiligen Viewers alle möglichen Funktionen des zweiten Browsers durchzuführen, also Links verfolgen, Eingabefelder ausfüllen usw.

FIG. 3 zeigt System 30 zum gleichzeitigen Anzeigen desselben Inhalts auf zu verschiedenen Computern gehörenden Bildschirmen, das einen Server-Computer 32 mit einem Browser 52 aufweist, mit einem ersten PC 34 mit einer ersten Viewer Applikation 54, und einen zweiten PC 38 mit einer zweiten Viewer Applikation 58, wobei beide Viewer Applikationen denselben Inhalt einer im Browser geladenen Web-Seite anzeigen.

FIG. 4 zeigt in der schematischen Darstellung 50 wichtige am vorzugsweise gemeinsamen Browsen gemäß der Erfindung nach dem in Bezug zu FIG. 2 und FIG. 3 beschriebenen Beispiel beteiligten Programme. Auf dem Server-Computer 32 läuft der aktive zweite Browser 52 und verarbeitet die aktuelle Web-Seite. In diesem Beispiel benutzt der zweite Browser 52 aber kein zu dem Server-Computer 32 gehörendes Ausgabegerät, sondern benutzt zur Anzeige des aktuellen Inhalts sowohl den ersten Viewer 54 und damit den Bildschirm des ersten PC 34 des Kunden als auch den zweiten Viewer 58 und damit den Bildschirm des zweiten PC 38 des Beraters, wobei die Daten über das Internet 56 zwischen zweitem Browser 52 und den Viewern 54 und 58 übertragen werden. Das Internet 56 umfasst hier wieder ein LAN mit IP zwischen dem Browser mindestens einem der PCs. In FIG. 4 nicht gezeigt sind Programme, die für den Zweck des Browsens lediglich Hilfsprogramme darstellen, nämlich das Steuerprogramm und ein Viewersteuerprogramm, welches vorzugsweise auch auf einem Server-Computer, vorteilhaft auf dem selben Server-Computer 32 wie das Steuerprogramm läuft und die beiden Viewer steuert. In diesem Beispiel wird einem Kunden und einem Berater derselbe Inhalt auf zu verschiedenen Computern gehörenden Bildschirmen gleichzeitig angezeigt.

Komponenten eines erfindungsgemäßen Systems sind nun mit Details in Bezug auf eine bevorzugte Ausführungsform mit einem Server-Computer unter dem Betriebssystem UNIX bzw. LINUX beschrieben. Dieses Betriebssystem eignet sich besonders gut für die Implementierung der Erfindung, auf Betriebssystem-Ebene eine Aufteilung in Datenverarbeitung durch ein Server-Programm auf einem Server-Computer und Anzeige zur Ein- und Ausgabe auf einem Client-PC durch ein spezielles X-Window-Protokoll unterstützt wird. Die auf einem oder mehreren Servern arbeitenden Programme sind hier also UNIX bzw. LINUX Programme.

Das Steuerprogramm arbeitet als Serverkomponente, die die Sessions verwaltet und die benötigten Subkomponenten startet bzw. stoppt. Der zweite Browser führt die Bearbeitung führt die Bearbeitung der Web-Seiten im wesentlichen mit seiner Rendering-Engine durch. Der zweite Browser benutzt als Anzeige eine virtuelle Anzeige in Form eines Viewersteuerprogramms.

Das Viewersteuerprogramm erscheint für den zweiten Browser als Anzeige. Es initiiert und koordiniert weiterhin die Viewer auf den PCs und steuert den Datenaustausch bezüglich der Anzeige mit diesen. Vorzugsweise ist das Viewersteuerprogramm ein VNC-Server, das ist ein Server-Programm, welches das X-Window-Protokoll in ein RFB-Protokoll (Remote Frame Buffer Protocol) umsetzt. Das Protokoll zeichnet sich insbesondere dadurch aus, dass es besonders gut für niedrige Bandbreiten geeignet ist. Viewer unter dem jeweiligen Betriebssystem des entsprechenden PC verarbeiten die mit dem VNC-Server ausgetauschte Information zu einer Bildschirmanzeige.

Die Viewer-Applets sind eine Erweiterung des Viewers, der zum VNC-Server gehören. Verschiedene Arten von Viewern sind möglich. Etwa ein Standard-Viewer, der in den Browser des Anwenders geladen wird, und ein besonderer Viewer, der erweiterte Funktionen hat und in den Browser des Beraters geladen wird.

In diesem System läuft das erfindungsgemäße Verfahren beispielsweise folgendermaßen ab: Auf dem Server-Computer 32 startet das Steuerprogramm, Schritt 12. Ein Anwender startet zunächst einen ersten Browser 54, Schritt 14, auf dem ersten PC 34 und surft im Internet. Eine für Shared-Browsing vorbereitete Web-Site hat auf einer Seite einen Link als Eingang in ein Steuer-System. Der Begriff Steuer-System fasst die an einer Session Beteiligten Komponenten zusammen. Wählt der Anwender diesen Link aus, Schritt 16, so führt dies zu einem Sessionrequest im Steuer-System, und die Adresse der vorbereitete Web-Site wird an das Steuerprogramm übermittelt. Das Steuerprogramm erzeugt eine neue Shared-Browsing-Session. Für diese Session wird vom Steuerprogramm zunächst ein VNC-Server und ein Browser gestartet, Schritt 18, und ein freier Berater gesucht, wobei die Suche und Auswahl eines freien Beraters von Communication Centern her bekannt ist. Das Steuerprogramm veranlaßt über den VNC-Server das Starten je eines Viewers im PC 34 des Anwenders und im PC 38 des Beraters, Schritte 20 und 22.

In den Browser des Anwenders wird ein Applet als Viewer für das Steuer-System geladen. Das Applet veranlaßt das Laden und Starten eines Viewers 54 im PC 34 des Anwenders. Im PC 38 des Beraters dagegen ist in diesem Beispiel der Viewer 58 bereits vorhanden und es wird lediglich eine neue Instanz des Viewers gestartet.

Unter der Steuerung des Steuerprogramms verbinden sich der Anwender-Viewer 54 und der Viewer 58 des Beraters beide mit dem zu dieser Session gehörenden VNC-Server und fortan können beide Anwender gemeinsam im Internet surfen.

Das gleichzeitige Anzeigen wird vorzugsweise durch Schließen eines Viewers oder durch Betätigen eines Buttons beendet. Falls etwa im obigen Beispiel der Benutzer eines der PC seinen Viewer schließt erhält das Steuerprogramm über das Viewersteuerprogramm diese Information und teilt dies dem Benutzer des anderen PC etwa in einem neuen Fenster mit, so dass der Benutzer des anderen PC seinerseits seinen Viewer bzw. seine Viewer-Instanz schließen kann oder durch einen Button im neuen Fenster dies veranlasst. Es ist ebenfalls konfigurierbar, dass der Benutzer des anderen PC über den zweiten Browser alleine weiter surft.

Nach dem vorbeschriebenen Beispiel hat ein System zum gleichzeitigen Anzeigen desselben Inhalts auf zu verschiedenen Computern gehörenden Bildschirmen, das einen Server-Computer mit einem Browser aufweist, einen ersten PC mit einer ersten Viewer Applikation, und einen zweiten PC mit einer zweiten Viewer Applikation, wobei beide Viewer Applikationen denselben Inhalt einer im Browser geladenen Web-Seite anzeigen. Vorteilhaft werden Server-Computer mit dem Browser und dem Viewersteuerprogramm auf einem Server-Computer unter UNIX oder LINUX betrieben.

Das Verfahren zum gleichzeitigen Anzeigen desselben Inhalts kann auf einen dritter Computer mit einem dritten Viewer erweitert werden, etwa indem einer der Benutzer, zum Beispiel der Berater im obigen Beispiel, einen weiteren Berater einschaltet.

Die Ausführung der Erfindung ist nicht auf das beschriebene Beispiel und die oben hervorgehobenen Aspekte beschränkt, sondern im Rahmen der Ansprüche ebenso in einer Vielzahl von Abhandlungen möglich, die im Rahmen fachgemäßen Handelns liegen.

## Patentansprüche

1. Verfahren zum gleichzeitigen Anzeigen desselben Inhalts auf zu verschiedenen Computern (34, 38) gehörenden Bildschirmen mit den Verfahrensschritten, nicht notwendig in dieser Reihenfolge
- Starten eines Steuerprogramms (12);
- Starten eines ersten Browsers (14);
- Auswählen eines Links zu dem Steuerprogramm auf dem ersten Browser und übermitteln einer Adresse einer Web-Seite zu dem Steuerprogramm (16);
- Starten eines zweiten Browsers mit der Web-Seite durch das Steuerprogramm (18);
- Starten eines ersten Viewers auf einem ersten Computer des ersten Browsers (20);
- Starten eines zweiten Viewers auf einem zweiten Computer (22);
- Anzeigen des Inhalts der Web-Seite des zweiten Browsers auf dem ersten Viewer (24);
- Anzeigen des Inhalts der Web-Seite des zweiten Browsers auf dem zweiten Viewer (26).

2. Verfahren zum gleichzeitigen Anzeigen desselben Inhalts nach Anspruch 1 mit den weiteren Verfahrensschritten, nicht notwendig in dieser Reihenfolge
- Durchführen einer Eingabe zu der angezeigten Web-Seite des zweiten Browsers in einem der Viewer und Übermitteln von Daten des ausgewählten Links zu dem zweiten Browser (42);
- Durchführen der Eingabe mit den übermittelten Daten durch den zweiten Browser (44);
- Anzeigen des Inhalts der Web-Seite bzw. des aktuellen Browser-Inhalts des zweiten Browsers auf dem ersten Viewer (46);
- Anzeigen des Inhalts der Web-Seite bzw. des aktuellen Browser-Inhalts des zweiten Browsers auf dem zweiten Viewer (48).

3. Verfahren zum gleichzeitigen Anzeigen desselben Inhalts nach Anspruch 1 oder 2, wobei das Starten eines Browsers (14, 18) durch Aufrufen einer neuen Instanz eines bereits geladenen Browsers erfolgt.

4. Verfahren zum gleichzeitigen Anzeigen desselben Inhalts nach einem der Ansprüche 1 bis 3, wobei der zweite Browser (52) auf einem Server-Computer (32) betrieben wird.

5. Verfahren zum gleichzeitigen Anzeigen desselben Inhalts nach einem der vorhergehenden Ansprüche, wobei das Starten eines Viewers (20, 22) durch Übermittlung eines Java-Applets erfolgt.

6. Verfahren zum gleichzeitigen Anzeigen desselben Inhalts nach einem der vorhergehenden Ansprüche, wobei das Starten eines Viewers (20, 22) durch Aufrufen einer neuen Instanz eines bereits geladenen Viewers erfolgt.

7. Verfahren zum gleichzeitigen Anzeigen desselben Inhalts nach einem der vorhergehenden Ansprüche, wobei ein Viewersteuerprogramm die Viewer (54, 58) steuert.

8. Verfahren zum gleichzeitigen Anzeigen desselben Inhalts nach einem der vorhergehenden Ansprüche, wobei Daten an einen Viewer im RFB Protokoll übermittelt werden.

9. Verfahren zum gleichzeitigen Anzeigen desselben Inhalts nach einem der vorhergehenden Ansprüche, wobei das Durchführen der Eingabe der angezeigten Web-Seite des zweiten Browsers (42) auf einen der Viewer (54, 58) beschränkt ist.

10. Web-Seite mit einem Link zu einem Dienst, **dadurch gekennzeichnet, dass** bei Aktivierung des Links ein Verfahren zum gleichzeitigen Anzeigen desselben Inhalts nach einem der vorhergehenden Ansprüche durchgeführt wird.

11. System zum gleichzeitigen Anzeigen desselben Inhalts auf zu verschiedenen Computern gehörenden Bildschirmen, das einen Server-Computer (32) mit einem Browser (52) aufweist, **gekennzeichnet durch** einen ersten PC (34) mit einer ersten Viewer Applikation (54), und einen zweiten PC (38) mit einer zweiten Viewer Applikation (58), wobei beide Viewer Applikationen denselben Inhalt einer im Browser geladenen Web-Seite anzeigen.
